# EUROPÄISCHE PATENTANMELDUNG

(11) **EP 3 657 570 A1**
(43) Veröffentlichungstag der Anmeldung: **27.05.2020**
(21) Anmeldenummer: 18208345.1
(22) Anmeldetag: 26.11.2018
(51) Int. Cl.: H01M 2/20, H01M 10/42, H01M 2/30

(54) **BATTERIEMODUL**

(71) Anmelder: Aptiv Technologies Limited, St. Michael (BB)
(72) Erfinder: WOESTE, Guido, 58332 Schwelm (DE); PATZ, Olaf, 21521 Wohltorf (DE)
(74) Vertreter: Manitz Finsterwald Patent- und Rechtsanwaltspartnerschaft mbB

(57) **Zusammenfassung**

Ein Batteriemodul (10) für Hochvolt-Batterie-Packs vorzugsweise für den Einsatz in Fahrzeugen, umfassend eine Mehrzahl von Batteriezellen (100), ein Zell-Balancing-System zum Balancieren der Ladung der einzelnen Batteriezellen (100), umfassend jeweils ein an jeder der Batteriezellen (100) angebrachtes elektronisches Batteriezellenüberwachungsmodul (110), wobei die Batteriezellenüberwachungsmodule (110) lösbar, mittels erster Verbindungsmittel, durch einen Balancingbus (130), zur Übertragung von Daten und elektrischem Strom, miteinander verbunden sind, wobei die elektronischen Batteriezellenüberwachungsmodule (110) mit einem Pluspol (102) und einem Minuspol (104) der Batteriezelle (100) elektrisch verbunden sind, einen Modulträger (300) zum Aufnehmen und halten der Mehrzahl der Batteriezellen (100), wobei der Modulträger (300) zweite Verbindungsmittel, zum elektrischen Verbinden eines Pluspols (102) der Batteriezelle (100) mit dem Minuspol (104) einer benachbarten Batteriezelle (100), sowie zum elektrischen Verbinden eines Minuspols (104) der Batteriezelle (100) mit dem Pluspol (102) einer benachbarten Batteriezelle (100) umfasst, wobei der Modulträger (300) den Balancingbus (130), der mindestens zwei elektrische Leitungen (140, 141) aufweist, umfasst, wobei der Modulträger (300) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist, um elektrische Energie darüber aufzunehmen oder abzugeben.

## Beschreibung

Die Erfindung betrifft ein Batteriemodul für Hochvolt-Batterie-Packs zur Verwendung in Fahrzeugen sowie ein Verfahren zum Zusammenbau des Batteriemoduls.

Unter anderem für die Elektromobilität, insbesondere im Automobilbereich, werden aktuell bevorzugt Lithium-basierte Akkuzellen (Batteriezellen) als Basis für Batteriemodule und solche als Basis für Hochvolt-Batterie-Packs verwendet. Bekannt sind Akkumulator(AKKU)-Batterie-Module, die aus mehreren in Reihe geschalteten einzelnen Batteriezellen oder parallel geschalteten Batteriezellblöcken zusammengeschaltet werden. Solche Batterie-Module werden auch zu Hochvolt-Batteriepacks in Reihe und parallelgeschaltet. Vorzugsweise werden hier großformatige Zellen, s.g. "Prismatische Zellen" verwendet. Diese werden üblicherweise zunächst mechanisch miteinander zu Gruppen s.g. Modulen verbunden und in Gehäusen platziert. Danach werden elektrische Strombrücken s.g. Zellverbinder an den Zellpolen montiert und durch Verschweißen fest mit den Zellpolen verbunden. Durch das Verschweißen sind die Zellen unlösbar mechanisch miteinander verbunden. Diese Batteriemodule werden dann üblicherweise mit Elektronikeinheiten bestückt, die viele Leitungsverbindungen zu allen Einzelzellen und Zellenpolen erhalten. Diese Module werden wiederum mit weiteren Modulen zu Batteriepacks zusammengeschaltet und erhalten eine überordnete Elektronikeinheit mit entsprechendem Verdrahtungssystem, dies wird dann an die Zentralelektronik eines Fahrzeugs angeschlossen, die das Energiemanagement des gesamten Hochvolt-Batterie-Packs übernimmt. Durch ständig steigende Anforderungen an die Stromtragfähigkeit und Reduzierung von Verlustleistung, sowie die Notwendigkeit der Weiterverwendung nach einem "First-Life" in einem Fahrzeug, wäre es wünschenswert, solche Batteriepacks einfach wieder in einzelne Batteriezellen zerlegen zu können, die separaten Batteriezellen danach nach ihren Kenndaten zu sortieren und gleichwertige Batteriezellen zu neuen Batteriemodulen oder Packs zusammenzusetzen. Die Montage, sowie Demontage und das Sortieren der Batteriezellen sollte vollautomatisch durch Maschinen erfolgen können, um die Montagekosten gering zu halten.

Die Aufgabe der Erfindung kann darin gesehen werden, ein Batteriemodul für Hochvolt-Batterie-Packs bereitzustellen, bei dem die Batteriezellen schnell austauschbar sind und wobei die Funktionsfähigkeit des Batteriemoduls nur durch den Vorgang des Austausches unterbrochen ist.

Die Aufgabe wird durch den Gegenstand des Anspruchs 1 sowie durch das Verfahren nach Anspruch 14 gelöst.

Insbesondere durch ein Batteriemodul für Hochvolt-Batterie-Packs, vorzugsweise für den Einsatz in Fahrzeugen. Das Batteriemodul umfasst eine Mehrzahl von Batteriezellen und ein Zell-Balancing-System zum Balancieren der Ladung der einzelnen Batteriezellen. Das Zell-Balancing-System umfasst jeweils ein, an jeder der Batteriezellen angebrachtes, elektronisches Batteriezellenüberwachungsmodul. Die Batteriezellenüberwachungsmodule sind lösbar, mittels erster Verbindungsmittel, durch einen Balancingbus, zur Übertragung von Daten und elektrischem Strom, miteinander verbunden. Die elektronischen Batteriezellenüberwachungsmodule sind mit einem Pluspol und einem Minuspol der Batteriezelle elektrisch verbunden. Ein Modulträger zum Aufnehmen und halten der Mehrzahl der Batteriezellen. Der Modulträger umfasst zweite Verbindungsmittel, zum elektrischen Verbinden eines Pluspols der Batteriezelle mit dem Minuspol einer benachbarten Batteriezelle, sowie zum elektrischen Verbinden eines Minuspols der Batteriezelle mit dem Pluspol einer benachbarten Batteriezelle. Der Modulträger umfasst den Balancingbus, der mindestens zwei elektrischen Leitungen aufweist. Der Modulträger umfasst ein Energiespeichermodul zur Speicherung elektrischer Energie. Das Energiespeichermodul ist elektrisch mit den zwei elektrischen Leitungen des Balancingbuses verbunden, um elektrische Energie darüber aufzunehmen oder abzugeben.

Um die Batteriezellen schnell austauschbar zu machen, sollten Kontaktsysteme, die Werkzeuge zum Verbinden oder lösen der Hochstromkontakte erfordern, sowie feste Verbindungen, wie z.B. Schweißverbindungen, vermieden werden. Daher ist ein steckbares Kontaktierungssystem notwendig. Das Hochstromverdrahtungssystem ist vollständig in dem Modulträger integriert, wodurch zusätzlicher Verdrahtungsaufwand entfällt. Dabei wird die Hochstromkontaktierung der Batteriezellen durch Steckkontakte vereinfacht, wobei die Übergangswiderstände des verwendeten Kontaktierungssystems vernachlässigbar gering sind. Das Kontaktierungssystem muss zusammen mit den Gehäuseaufnahmen in der Lage sein, mechanische Toleranzen auszugleichen, die bei der Montage oder im Betrieb auftreten können. Auch der Balancingbus ist vollständig in dem Modulträger integriert, wodurch zusätzlicher Verdrahtungsaufwand entfällt. Die Kontaktierung des Balancingbuses ist unkritisch, da hier nur geringere Spannungen und Ströme wirken. Da das Energiespeichermodul ebenso integral im Modulträger verbaut ist, kann ein defekter Modulträger schnell und problemlos ausgetauscht werden, was die Servicefreundlichkeit erhöht und die Kosten senkt. Um nach dem Austausch ein funktionsfähiges und leistungsfähiges Batteriemodul bereitzustellen, müssen alle Batteriezellen einen vergleichbaren Ladezustand vorweisen. Bei der Reihenschaltung von Akkus besteht die Problematik, dass mit zunehmender Anzahl von Lade- und Entladezyklen die Akkukapazitäten der Zellen auseinanderdriften und sich so, orientierend an der schwächsten Zelle, die Gesamtkapazität eines Packs kontinuierlich reduziert. Zur Vermeidung eines solchen Verhalten ist es bereits Stand der Technik, die Ladung zwischen den Zellebenen auszubalancieren. Dies geschieht üblicherweise passiv beim Laden durch elektronisch kontrolliertes Zuschalten von Widerständen zu den Zellen, die bereits ein hohes Niveau an Ladung erreicht haben, um so den Strom zum Laden der anderen Zellen, an dieser "vollen Zelle" vorbeizuführen. Des Weiteren wird das so genannte Aktiv-Balancing eingesetzt, um die beim Passiv-Verfahren entstehenden Verluste zu reduzieren. Dabei werden Ladungsportionen elektronisch von höher geladenen Zellen abgenommen und an niedriger geladene Zellen wieder abgegeben. Dies wird üblicherweise durch eine zentrale, gemeinsame Elektronikeinheit realisiert. Zentrale Elektroniken überwachen und balancieren einen festen Zellenverbund. Dabei werden Energieportionen von Einzelzellen entnommen, über Spannungs-Wandler zwischengespeichert und danach an andere Einzelzellen wieder abgegeben. Hierbei ist eine aufwändige Verdrahtung notwendig, welche die Spannungsabgriffe und Temperatursensorsignale zentral auf der Elektronik zusammenführt. Nach einer Demontage in Einzelzellen, sofern möglich, sind alle Daten zu den einzelnen Zellen nicht mehr verfügbar. Die Zellen müssen dann einzeln aufwendig charakterisiert werden, damit sie als Gleichwertige identifiziert neu zusammengesetzt werden können. Das Balancieren der einzelnen Batteriezellen wird durch das intelligente Zell-Balancing-System mithilfe des Energiespeichermoduls bewerkstelligt.

Das Verfahren zum Zusammenbau eines Batteriepacks umfasst die Schritte:
a) Bereitstellen einer Mehrzahl von Batteriezellen, wobei die Mehrzahl von Batteriezellen nach ihren Kenndaten vorselektiert ist, umfassend jeweils ein an jeder der Batteriezellen angebrachtes elektronisches Batteriezellenüberwachungsmodul, wobei die elektronischen Batteriezellenüberwachungsmodule mit einem Pluspol und einem Minuspol der Batteriezelle elektrisch verbunden sind, wobei die Batteriezellenüberwachungsmodule lösbar, mittels erster Verbindungsmittel, durch einen Balancingbus, zur Übertragung von Daten und elektrischem Strom, miteinander verbindbar sind;
b) Bereitstellen eines Modulträgers zum Aufnehmen und halten der Mehrzahl der Batteriezellen, wobei der Modulträger zweite Verbindungsmittel, zum elektrischen Verbinden eines Pluspols der Batteriezelle mit dem Minuspol einer benachbarten Batteriezelle, sowie zum elektrischen Verbinden eines Minuspols der Batteriezelle mit dem Pluspol einer benachbarten Batteriezelle umfasst, wobei der Modulträger den Balancingbus, der mindestens zwei elektrische Leitungen aufweist, umfasst, wobei der Modulträger ein Energiespeichermodul zur Speicherung elektrischer Energie umfasst, wobei das Energiespeichermodul elektrisch mit den zwei elektrischen Leitungen des Balancingbuses verbunden ist um elektrische Energie darüber aufzunehmen oder abzugeben;
c) Einstecken der Mehrzahl der Batteriezellen in den Modulträger, wodurch die Verbindung der Batteriezellenüberwachungsmodule miteinander und mit dem Energiespeichermodul über den Balancingbus hergestellt wird, sowie die Verbindungen der Batteriezellen mit den zweiten Ver-bindungsmitteln.

Die Vorselektion der Batteriezellen wird bei einem neu zusammengestellten Batteriemodul vor dem Zusammenbau vorgenommen und in einer Datenbank eingetragen. Der Hersteller kombiniert die Batteriezellen so, dass Batteriezellen mit nahezu identischen Kenndaten zusammengestellt werden. Diese Maßnahme soll bewirken, dass das Batteriemoduls optimale Performance zeigt, weil alle Batteriezellen gleichmäßig belastet werden können. Muss während der Lebenszeit des Batteriemoduls eine Batteriezelle wegen Defekts ausgetauscht werden, so werden die Kenndaten der verbleibenden Batteriezellen ausgelesen und bewertet. In der Batteriezellen Datenbank wird eine Ersatzbatteriezelle gesucht, die zu den bereits vorhandenen Batteriezellen und deren Kenndaten passt. Das neue Batteriemodul weist danach wieder ein Set von Batteriezellen auf, die gleichmäßig belastet werden können.

Vorteilhafte Ausbildungen der Erfindung sind den Unteransprüchen, der Beschreibung und den Zeichnungen zu entnehmen.

Bevorzugt ist das zweite Verbindungsmittel, ein elektrisches Anschlusselement, welches als Stanzteil aus einem Metallblech gefertigt ist und zumindest eine frei auskragende Zunge aufweist, die aus der Blechebene auf eine erste Seite des Blechs heraus gebogenen ist und sich in einer zur Blechebene parallelen Ebene erstreckt. Das Anschlusselement weist zwei in Steckrichtung des Anschlusselements frei auskragenden Finger auf, welche sich parallel zu der zumindest einen frei auskragende Zunge in der Blechebene erstrecken. Die beiden frei auskragenden Finger bilden in Steckrichtung das vordere Ende des Anschlusselements. Die zwei in Steckrichtung des Anschlusselements frei auskragenden Finger definieren somit zwischen ihnen ein am vorderen Ende des Anschlusselements offenen Spalt, welcher durch die aus der Blechebene herausgebogene, frei auskragende, Zunge, überdeckt ist. Beim Zusammenstecken zweier miteinander zu verbindender Anschlusselemente dienen die Finger eines Anschlusselements bzw. der durch diesen gebildeten Spalt als Führung für die Zunge des jeweils andern Anschlusselements, wodurch ein passgenauer Sitz zweier miteinander zu verbindender Anschlusselemente sichergestellt werden kann. Dadurch, dass sich die beiden frei auskragenden Finger wie die frei auskragende Zunge in Steckrichtung des Anschlusselements erstrecken und dabei das vordere Ende desselben bilden, können zwei um 180° zueinander verdrehte identische Anschlusselemente mit den freien Enden der frei auskragenden Finger voraus durch eine lineare Steckbewegung miteinander in Eingriff gebracht werden, was zur Folge hat, dass das Metallblech, aus dem das jeweilige Anschlusselement gestanzt ist, zwischen den beiden Fingern und der frei auskragenden Zunge des jeweils anderen Anschlusselements reibschlüssig festgeklemmt wird. Dieses Kontaktelement ist bereits unter der Nummer EP2551963 zum Patent angemeldet. Das Kontaktelement ist einfach herzustellen und kann auch mit einer einfachen Stromschiene in Form eines länglichen Blechstreifens verwendet werden. Wobei ein Teil der Stromschiene zwischen die Finger und die Zunge geklemmt wird. Bei durch Erwärmung verursachte Ausdehnung des Kontaktsystems, kann sich das Kontaktelement in Relation zur Stromschiene bewegen, um mechanischen Toleranzen auszugleichen, wobei dann die Kontaktkräfte zunehmen.

Bevorzugt umfasst das zweite Verbindungsmittel eine Mehrzahl von Polkontaktelementen . Jedes Polkontaktelement umfasst ein elektrisches Anschlusselement, wobei sich von den beiden frei auskragenden Fingern , am vordere Ende , ein Kontaktstreifen des Blechs rechtwinkelig zur Steckrichtung , entgegen der erste Seite , erstreckt. Dabei ist ein Polkontaktelement am Pluspol einer Batteriezel-le angebracht und ein zweites Polkontaktelement am Minuspol einer Batteriezelle angebracht. Die Polkontaktelemente sind in Steckrichtung ausgerichtet. Durch die Ausführung einer Seite der Polkontaktelemente in Form der Anschlusselemente kann die Batteriezelle sehr einfach mit der Stromschiene, bzw. mit identisch ausgeformten Anschlusselementen verbunden werden. Für die Montage oder Demontage werden keine Werkzeuge benötigt und sie kann vielfach im Wechsel wiederholt werden. Die andere Seite des Polkontaktelements kann mittels des Kontaktstreifens unlösbar mit dem Batteriepol verbunden werden. Dies kann durch verschweißen bewerkstelligt werden.

Bevorzugt umfasst das Batteriemodul eine Mehrzahl von Stromschienen , wobei jede Stromschiene an einem ersten Ende ein Anschlusselement aufweist und an ihrem zweiten Ende ein zweites Anschlusselement aufweist, wobei sich die Stromschiene rechtwinkelig zur Steckrichtung erstreckt.. Durch die Anordnung der Anschlusselemente von Batteriepolen und Stromschienen kann leicht eine Reihenschaltung der Batteriezellen realisiert werden. Der Übergangswiderstand der Stromschienen zwischen den Anschlusselementen ist sehr gering, da die Stromschiene inklusive der Anschlusselemente einteilig ausgeführt ist und keine zusätzlichen Übergangswiderstände zu berücksichtigen sind.

Bevorzugt sind die elektrischen Anschlusselemente der Polkontaktelemente und die elektrischen Anschlusselemente der Stromschienen so zueinander und entlang der Steckachse ausgerichtet, dass sie, bei korrekter Ausrichtung der Batteriezelle , bei Bewegung aufeinander zu, ineinander gleiten und elektrischen Kontakt herstellen. Dieser Aufbau ermöglicht einen selbstfindenden Kontierungsprozess.

Bevorzugt sind die elektrischen Anschlusselemente der Polkontaktelement und die elektrischen Anschlusselemente der Strom-schienen so zueinander und entlang der Steckachse ausgerichtet, dass sie, bei inkorrekter Ausrichtung der Batteriezelle , bei Bewegung aufeinander zu, nicht ineinander gleiten und keinen elektrischen Kontakt herstellen. Diese Ausgestaltung der Anschlusselemente macht es möglich Kodierungen vorzusehen, um zu verhindern, dass der falsche Batteriepol mit der Stromschiene verbunden wird. Es ist auch denkbar, die Anschlusselemente an der Stromschiene unsymmetrisch zur Mitte der länglichen Stromschiene zu positionieren. Werden die Stromschiene dann entsprechend im Modulträger angeordnet, finden die Batteriepole einer falsch eingesetzten Batteriezelle keinen Gegenpol in der Stromschiene. Dieses vermeidet ungewollte Kurzschlüsse oder Verpolungen, die das ganze Batteriemoduls zerstören könnten. Die Materialstärke und Breite der Anschlusselemente können variiert werden, um die Stromtragfähigkeit zu verändern.

Bevorzugt weist ein erstes Polkontaktelement angebracht an einem ersten Batteriepol, einer Batteriezelle , eine Ausdehnung, rechtwinke-lig zur Steckrichtung , auf, die verschieden ist von der Ausdehnung eines zweiten Polkontaktelements , dass an dem zweiten Batteriepol angebracht ist. Dadurch wird verhindert, dass nur geometrisch aufeinander abgestimmte Kontaktteile miteinander in Eingriff kommen können, wodurch Verpolungen vermieden werden.

Bevorzugt umfasst das zweite Verbindungsmittel eine Mehrzahl von Brückenkontaktelementen . Jedes Brückenkontaktelement umfasst zwei der elektrischen Anschlusselemente . Die elektrischen Anschlusselemente sind parallel zueinander angeordnet, wobei die ersten Seiten der elektrischen Anschlusselemente in entgegengesetzte Richtungen zeigen. Die elektrischen Anschlusselemente durch ein Stück des Metallblechs verbunden. Diese Brückenkontaktelemente ermöglichen einen Verbindungsaufbau bei alternativer Zellenanordnung.

Bevorzugt weist der Modulträger eine Mehrzahl von Ausnehmungen auf, die dazu ausgebildet sind die Mehrzahl von Batteriezellen aufzunehmen und zu halten, wobei sich jede Ausnehmung von einer Öffnung, entlang der Steckrichtung erstreckt, wobei die Mehrzahl der Stromschienen gegenüber den Öffnungen angeordnet sind. Die Batteriepole der Batteriezellen, die in die Ausnehmungen eingeschobenen werden, werden erst kontaktiert, wenn die Batteriezelle größtenteils in der Ausnehmung gehalten ist. Dieses erhöht die Sicherheit gegen Beschädigung der Batteriepole. Des Weiteren wird die Batteriezelle in der Ausnehmung mechanisch geführt, wodurch die Batteriepole vor dem Kontaktieren der Stromschienen bereits gut ausgerichtet sind. Es kann auch ein Zellenträger als Untergehäuse vorgesehen werden, um die Zellen aufzunehmen und mechanisch zu stabilisieren, wobei dann das beschriebene Modulträgersystem von oben als Deckel montiert wird und damit in einem Schritt alle elektrischen Verbindungen herstellt werden und das Modul verschlossen wird.

Bevorzugt umfasst das erste Verbindungsmittel ein sich selbst findendes Stecksystem, um den Balancingbus mit den elektronischen Batteriezellenüberwachungsmodulen und dem Energiespeichermodul zu verbinden. Bei der Blindmontage von elektrischen Steckern werden diese Stecksysteme bereits verwendet. Diese Stecksysteme benutzen trichterförmige Strukturen und entsprechende Aufnahmen, die eine entsprechende Seitwärtsbewegung ermöglichen, um die Stecker entlang der Steckstrecke zueinander zu führen und ein zusammenstecken zu ermöglichen. Anstelle des beschriebenen Stecksystems könnten auch Kontakte an den Seitenwänden der Batteriezelle vorgesehen werden. Die Kontakte, die an den Begrenzungswänden, die die Ausnehmung umgeben, angebracht sind, kontaktieren dann seitlich. Nach dem Einstecken der Batteriezellen in die Ausnehmungen, könnten die Kontakte der Batteriezellen die Kontakte an den Begrenzungswänden kontaktieren. Es sind viele weitere Möglichkeiten denkbar die Kontaktierung des Balancingbuses auszugestalten.

Bevorzugt ist das Energiespeichermodul einteilig mit dem Modulträger ausgebildet. Durch diese Ausgestaltung ist das Energiespeichermodul mechanisch und elektrisch geschützt im Modulträger integriert. Die Kosten für das Energiespeichermodul können reduziert werden, weil es kein eigenes Gehäuse sowie Steckverbindungen benötigt.

Bevorzugt weisen die elektronischen Batteriezellenüberwachungsmodule einen ersten elektrischen Schalter und einen zweiten elektrischen Schalter auf. Die elektrischen Schalter sind dazu ausgebildet die Batteriezellen elektrisch mit jeweils einer der zwei elektrische Leitungen des Balancingbuses zu verbinden. Die elektronischen Batteriezellenüberwachungsmodule und das Energiespeichermodul sind durch den Balancingbus miteinander verbunden und bilden dadurch ein Zell-Balancing-System.

Die elektronischen Batteriezellenüberwachungsmodule und die verwendeten Batteriezellen sind im Wesentlichen von gleicher Bauart. Die in den Batteriezellenüberwachungsmodulen verwendeten elektronischen Bauteile sollten in allen Batteriezellenüberwachungsmodule identisch oder technisch vergleichbar sein. Dadurch ist ein reibungsloser Ablauf der Steuerungsprogramme gewährleistet, die die Batteriezellenüberwachungsmodule steuern. Die Steuerungsprogramme die für Steuerung der Batteriezellenüberwachungsmodule verwendet werden sind ebenfalls identisch. Die elektronischen Batteriezellenüberwachungsmodule, die jeweils fest mit einer Batteriezelle verbunden sind, erfassen kontinuierlich die Kennwerte der Batteriezelle. Die Kennwerte der Batteriezelle sind zumindest die elektrische Spannung zwischen den Batteriepolen, und die Temperatur der Batteriezelle. Die Batteriezellenüberwachungsmodule erfassen des Weiteren die elektrische Spannung zwischen den mindestens zwei elektrischen Leitungen und können dadurch den Ladungszustand des elektrischen Energiespeichermoduls beurteilen. Die elektronischen Batteriezellenüberwachungsmodule verfügen über die Fähigkeit über den Balancingbus miteinander zu kommunizieren wobei ein Netzwerk nach dem bekannten Multi-Master-System verwendet werden kann. Die elektronischen Batteriezellenüberwachungsmodule kommunizieren miteinander und vergleichen die Spannungswerte ihrer eigenen Batteriezellen mit den Spannungswerten der anderen Batteriezellen. Nach Konsensbildung aller elektronischen Batteriezellenüberwachungsmodule verbindet sich eine Batteriezelle die die höchste elektrische Spannung aufweist, gemeinsam mit einer benachbarten Batteriezelle mit den zwei elektrischen Leitungen, des Balancingbus und leitet darüber elektrische Energie von den Batteriezellen in den elektrischen Energiespeicher und trennt sich wieder von den zwei elektrischen Leitungen. Danach verbindet sich eine Batteriezelle die eine zu niedrige elektrische Spannung aufweist mit den zwei elektrischen Leitungen, des Balancingbuses und leitet darüber elektrische Energie von dem elektrischen Energiespeicher in die Batteriezelle und trennt sich wieder von den zwei elektrischen Leitungen. Dieser Vorgang setzt sich kontinuierlich fort. Das Energiespeichermodul kann einen Kondensator, eine elektrische Spule oder eine Kombination aus einem Kondensator und einer elektrischen Spule umfassen um elektrische Energie zu speichern.

Ein Verfahren zum Anpassen der Ladung der einzelnen Batteriezellen eines Batteriemoduls auf ein vorgegebenes Niveau kann folgende Schritte umfassen:
a) Bereitstellen eines Batteriemoduls, umfassend eine Mehrzahl von Batteriezellen, umfassend jeweils ein an jeder der Batteriezellen angebrachtes elektronisches Batteriezellenüberwachungsmodul, wobei die Batteriezellenüberwachungsmodule durch einen, mindestens zwei elektrische Leitungen umfassen-den, Balancingbus, zur Übertragung von Daten und elektrischem Strom, miteinander verbunden sind, wobei die elektronischen Batteriezellenüberwachungsmodule mit einem Pluspol und einem Minuspol der Batteriezelle elektrisch verbunden sind, wobei die elektronischen Batteriezellenüberwachungsmodule einen ersten elektrische Schalter und einen zweiten elektrischen Schalter aufweisen, wobei die elektrischen Schalter dazu ausgebildet sind die Batteriezellen elektrisch mit jeweils einer der zwei elektrische Leitungen des Balancingbuses zu verbinden, wobei das Batteriemodul ein Energiespeichermodul zur Speicherung elektrischer Energie umfasst, wobei das Energiespeichermodul elektrisch mit den zwei elektrischen Leitungen des Balancingbuses verbunden ist um elektrische Energie darüber aufzunehmen oder abzugeben, wobei die elektronischen Batteriezellenüberwachungs-module und das Energiespeichermodul durch den Balancingbus miteinander verbunden, ein Zell-Balancing-System bilden.
b) Verbinden des Pluspols der Batteriezelle mit dem Minuspol der benachbarten Batteriezelle und verbinden des Minuspols der Batteriezelle mit dem Pluspol der benachbarten Batteriezelle, so das eine Reihenschaltung aller Batteriezellen entsteht, wobei ein Pluspol und ein Minuspol der Reihenschaltung nicht miteinander verbunden sind;
c) Starten der Kommunikation aller angeschlossenen Batteriezellensteuermodul über den Balancingbus;
c) Identifizieren aller Batteriezellenüberwachungsmodule;
d) Ermitteln der Anordnung der Batteriezellen im Batteriemodul;
e) Austauschen aller Ladezustände der Batteriezellen über den Balancingbus;
f) Kontrolle übernehmen, durch das Batteriezellenüberwachungsmodul mit der höchsten übermittelten Ladespannung;
g) Ausschalten zweier in Reihe geschalteten Batteriezellen, jeweils durch den Pluspol der einen Zelle und den Minuspol der anderen Zelle, wobei eine der Zellen, die Zelle mit der höchsten Zellspannung ist und die zweite in Reihe liegende Zelle mit der vergleichsweise höheren Zellspannung dieser beiden in Reihe liegenden Zellen ist.;
h) Laden des elektrischen Energiespeichers;
i)Trennen der Batteriezellen vom Balancingbus;
j) Aufschalten des Pluspols und des Minuspols der Batteriezellen mit der niedrigsten Ladespannung auf den Balancingbus;
k) Laden der Batteriezelle mit der Energie des elektrischen Energiespeichers;
l) Trennen der Batteriezellen vom Balancingbus;
m) Mit Verfahrensschritt e) fortfahren.

Die elektronischen Batteriezellenüberwachungsmodule sind als Multimastersysteme ausgelegt, damit die im Verbund befindlichen Batteriezellen, ohne externe Initialisierung, das aktive Balancing durchführen können. Zyklisch übermittelt jedes Batteriezellenüberwachungsmodul seinen Ladezustand. Diese werden in jedem Batteriezellenüberwachungsmodul zwischengespeichert. Das Batteriezellenüberwachungsmodul, welches im Verbund den höchsten Ladezustand hat, könnte dann für die Steuerung des nächsten Balancingzyklus zuständig sein. Der Zyklus beinhaltet die Ermittlung der beiden benachbarten Batteriezellen mit dem höheren Ladezustand. Mittels Steuerkommando wird das kurzeiteige Aufschalten der beiden in Reihe befindlichen Batteriezellen auf den Balancingbus zur Ladungsabgabe an das Energiespeichermodul eingeleitet. Ein weiteres Steuerkommando wird dann das kurzzeitige Aufschalten der schwächsten Batteriezelle zur Ladungsentnahme aus dem Energiespeichermoduls einleiten. Das Batteriezellenüberwachungsmodul der schwächsten Batteriezelle übernimmt hierbei das Monitoring des Ladezyklus und das Trennen vom Balancingbus. Nach der nächsten Ladezustandsermittlung, wird dann der nächste Balancingzyklus wie oben beschrieben durchgeführt

Jedes der elektronischen Batteriezellenüberwachungsmodule kann unabhängig von den weiteren elektronischen Batteriezellenüberwachungsmodulen, den Pluspol der Batteriezelle mittels des ersten elektrische Schalters mit einer der elektrischen Leitung des Balancingbusses verbinden und den Minuspol der Batteriezelle mittels des zweiten elektrischen Schalters mit der anderen elektrischen Leitung des Balancingbusses verbinden kann. Jedes der elektronischen Batteriezellenüberwachungsmodule verfügt über elektrische Schalter die einzeln Schaltbar sind. Die Ausführung der Schalter als Halbleiterbauelement macht es möglich hohe Schaltfrequenzen zu realisieren und gleichzeitig eine lange Lebenszeit zu garantieren. Jedes der elektronischen Batteriezellenüberwachungsmodule kann unabhängig von den weiteren elektronischen Batteriezellenüberwachungsmodulen, den Pluspol der Batteriezelle mittels des ersten elektrische Schalters mit einer der elektrischen Leitung des Balancingbusses verbinden und ein anderes Batteriezellenüberwachungsmodul kann den Minuspol der Batteriezelle mittels des zweiten elektrischen Schalters mit der anderen elektrischen Leitung des Balancingbusses verbinden, wobei sich dies, je nach Reihenfolge der Zellen, auch in umgekehrter Reihenfolge und Polarität vollziehen kann. Die Batteriezellen jeweils mit dem Minuspol und dem Pluspol der jeweiligen Nachbar Batteriezelle in Reihenschaltung elektrisch verbunden um eine höhere Gesamtspannung des Batteriemoduls zu erreichen. Durch die unabhängige Schaltmöglichkeit der elektrischen Schalter ist es möglich zum Beispiel den Pluspol einer Batteriezelle auf eine der zwei elektrischen Leitung aufzuschalten und den Minuspol der benachbarten Batteriezelle auf die zweite der zwei elektrischen Leitungen aufzuschalten. Durch die doppelte Spannung die nun zwischen den zwei elektrischen Leitungen anliegt, kann der elektrische Energiespeicher höher geladen werden. In Kombination mit kurzen Schaltzeiten können mit einer Ladung des elektrischen Energiespeichers mehrere Batteriezellen nacheinander geladen werden, ohne den elektrischen Energiespeicher dazwischen laden zu müssen. Das Batteriezellenüberwachungsmodul weist mindestens einen elektrischen Datenanschluss auf der kapazitiv mit einer der elektrischen Leitungen des Balancingbuses verbunden ist, wobei Steuersignale durch Modulation auf dieser elektrischen Leitung zu dem Datenanschluss übertragen werden. Durch das auf modulieren auf eine der elektrischen Leitungen kann eine zusätzliche Signalleitung entfallen. Die Datenübertragung kann alternativ durchgeführt werden, wenn das Batteriezellenüberwachungsmodule mindestens einen optischen Datenanschluss aufweist und der Balancingbus eine optische Leitung aufweist wobei der Datenanschluss optisch mit der optischen Leitung des Balancingbuses verbunden ist. Die Steuersignale werden durch Modulation von Licht auf der entsprechenden optischen Leitung übertragen. In der Fahrzeugtechnik hat sich die Verwendung von optischen Leitungen in besonders stark elektromagnetisch kontaminierten Umgebungen bewährt, um Störungen bei der Datenübertragung zu vermeiden. Des Weiteren kann die Datenübertragung über elektrische Leitungen durchgeführt werden. Das Batteriezellenüberwachungsmodul weist dazu mindestens einen elektrischen Datenanschluss auf der zweipolig ausgeführt ist. Der Balancingbus umfasst zwei elektrische Datenleitungen, die mit dem zweipoligen elektrischen Datenanschluss verbunden sind. Jeweils eine elektrische Datenleitung ist mit einem elektrischen Datenanschluss verbunden. Die Steuersignale werden durch Modulation auf den zwei elektrischen Datenleitungen übertragen werden. Je nach erforderlicher Datenübertragungsrate können auch einfach zwei elektrische Drähte als Datenleitung verwendet werden. Vorzugsweise werden diese Drähte miteinander verdrillt um Störungen zu minimieren. Die elektronischen Batteriezellenüberwachungsmodule sind programmierbar und umfassen mindestens einen Mikroprozessorbaustein der, Speicher, Ein/Ausgabe Ports, Temperatur und Spannungsmessmittel aufweist, wobei die elektronischen Batteriezellenüberwachungsmodule eine grundlegende Kommunikationsfunktionalität zur Kommunikation mit den anderen Batteriezellenüberwachungsmodulen mittels des Balancingbuses aufweisen. In der Industrie werden Mikroprozessorbausteine mit den oben genannten Eigenschaften seit langem verwendet und sind preiswert zu erwerben. Viele dieser Mikroprozessorbausteine verfügen über eine implementierte Kommunikationsfunktionalität mit verschiedenen in der Industrie verwendeten Übertragungsprotokollen und Verfahren. Diese Kommunikationsfunktionalität reduziert den Entwicklungsaufwand bei der Programmierung. Des Weiteren verfügen solche Mikroprozessorbausteine überwiegend über eine Energiesparfunktionalität die den Stromverbrauch auf ein Minimum reduziert. Das Batteriezellenüberwachungsmodul kann außerdem Transformationsmittel umfassen, die die elektrische Energie des elektrischen Energiespeichers in elektrische Spannung mit einstellbarer Höhe wandelt und diese an die Batteriepole anlegt. Das elektronische Batteriezellenüberwachungsmodul ist einteilig mit der Batteriezelle ausgebildet, wodurch ein autonomes Batterieelement entsteht. Das elektronische Batteriezellenüberwachungsmodul ist im Verhältnis zur Batteriezelle relativ klein und kann auf die Batteriezelle aufgeklebt werden. Denkbar ist auch eine Integration in das Gehäuse der Batteriezelle, was sich in einem erhöhten Schutz gegen Beschädigung des elektronischen Batteriezellenüberwachungsmoduls niederschlägt. Die Batteriezellen des Batteriemoduls können während des Betriebes als Energieversorgung, als auch in Zeiträumen in denen das Batteriemodul weder mit einer Energieversorgung noch mit einem Verbraucher verbunden ist, balanciert werden. Dadurch behält das Batteriemodul seine volle Funktionalität auch wenn es als Ersatzteil zwischengelagert ist. Eine Tiefentladung einer Batteriezelle wird weitgehend verhindert da alle Batteriezelle auf einem ähnlichen Spannung Niveau gehalten werden. Um eine Tiefentladung des gesamten Batteriemoduls zu verhindern kann eine Signalvorrichtung, die eine Tiefentladung signalisiert, an den Stromanschlüssen des Batteriemoduls vorgesehen werden, die signalisiert, dass die Gesamtspannung des Batteriemoduls zu tief wird. Die elektronischen Batteriezellenüberwachungsmodule weisen jeweils eine einzigartige Kennung z.B. nachdem UUID-Standard auf, wobei diese Kennung unlöschbar in den Batteriezellenüberwachungsmodulen implementiert ist und über den Balancingbus abgefragt werden kann. Diese einzigartige Kennung kann zum Beispiel in einem EPROM auf dem Batteriezellenüberwachungsmodul abgelegt sein. Ein Universally Unique Identifier (UUID) ist ein Standard für Identifikationen, der in der Softwareentwicklung verwendet wird. Er wurde von der Open Software Foundation (OSF) als Teil des Distributed Computing Environment (DCE) standardisiert. Die Absicht hinter UUIDs ist, Informationen in verteilten Systemen ohne zentrale Koordination eindeutig kennzeichnen zu können. Ein UUID besteht aus einer 16-Byte-Zahl, die hexadezimal notiert und in fünf Gruppen unterteilt wird. Die elektronischen Batteriezellenüberwachungsmodule speichern die Kenndaten der entsprechenden Batteriezelle aktualisiert über die Lebensdauer der Batteriezelle. Informationen über die Anzahl der Laden und Entladezyklen und weitere Kenndaten der Batteriezelle werden kontinuierlich abgespeichert und können über den Balancingbus abgefragt werden. Zum Beispiel könnte ein Service Gerät an den Balancingbus oder direkt an ein elektronisches Batteriezellenüberwachungsmodul angeschlossen werden um diese Daten anzusehen oder herunterzuladen. Anhand dieser Daten ist es möglich eine Vorhersage über die weitere Verwendungsfähigkeit der Batteriezelle zu treffen und sie gegebenenfalls auszutauschen.
- Fig. 1: zeigt eine perspektivische Darstellung des Batteriemoduls mit darüber schwebendem Modulträger.
- Fig. 2: zeigt eine Darstellung des Modulträgers.
- Fig. 3: zeigt eine perspektivische Darstellung eines Anschlusselements.
- Fig. 4: zeigt eine perspektivische Darstellung einer Stromschiene.
- Fig. 5: zeigt eine perspektivische Darstellung eines Polkontaktelements .
- Fig. 6: zeigt eine perspektivische Darstellung einer ersten Ausführungsform eins Brückenkontaktelements
- Fig. 7: zeigt eine perspektivische Darstellung einer zweiten Ausführungsform eins Brückenkontaktelements
- Fig. 8: zeigt eine perspektivische Darstellung des Batteriemoduls.
- Fig. 9: zeigt eine schematische Darstellung des Batteriemoduls.
- Fig. 10: zeigt Details zur der kapazitiven Kopplung des Datenanschlusses in schematische Darstellung

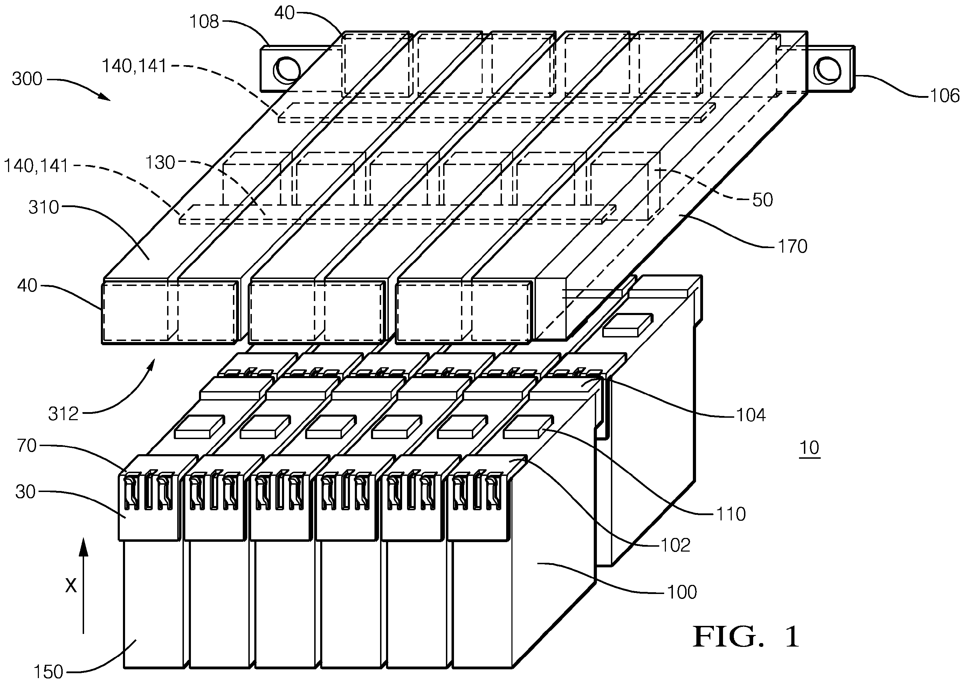

Figur 1 zeigt eine perspektivische Darstellung des Batteriemoduls 10 mit darüber schwebendem Modulträger 300. Das Batteriemodul 10 umfasst eine Mehrzahl von Batteriezellen 100. In dieser Darstellung sind jeweils sechs Batteriezellen in zwei Reihen angeordnet. Das gezeigte Batteriemodul umfasst zwei Reihen mit jeweils sechs Batteriezellen, die in Reihen geschaltet werden. Ein Zell-Balancing-System zum Balancieren der Ladung der einzelnen Batteriezellen 100, umfassend jeweils ein an jeder der Batteriezellen 100 angebrachtes elektronisches Batteriezellenüberwachungsmodul 110. Die Batteriezellenüberwachungsmodule 110 können lösbar, mittels erster Verbindungsmittel, durch einen Balancingbus 130, zur Übertragung von Daten und elektrischem Strom, miteinander verbunden werden. Ein Modulträger 300 zum Aufnehmen und Halten der Mehrzahl der Batteriezellen 100. Der Modulträger 300 umfasst zweite Verbindungsmittel, zum elektrischen Verbinden eines Pluspols 102 der Batteriezelle 100 mit dem Minuspol 104 einer benachbarten Batteriezelle 100, sowie zum elektrischen Verbinden eines Minuspols 104 der Batteriezelle 100 mit dem Pluspol 102 einer benachbarten Batteriezelle 100. Der Modulträger 300 umfasst den Balancingbus 130, der mindestens zwei elektrischen Leitungen 140, 141 aufweist. Der Modulträger 300 umfasst ein Energiespeichermodul 170 zur Speicherung elektrischer Energie. Das Energiespeichermodul 170 ist elektrisch mit den zwei elektrischen Leitungen 140, 141 des Balancingbuses 130 verbindbar, um elektrische Energie darüber aufzunehmen oder abzugeben. Das Energiespeichermodul 170 ist einteilig mit dem Modulträger 300 ausgebildet. Der Modulträger 300 weist eine Mehrzahl von Ausnehmungen 310 auf, die dazu ausgebildet sind die Mehrzahl von Batteriezellen 100 aufzunehmen und zu halten, wobei sich jede Ausnehmung 310 von einer Öffnung 312, entlang der Steckrichtung X erstreckt. Das Batteriemoduls 10 umfasst eine Mehrzahl von Stromschienen 40, wobei die Mehrzahl der Stromschienen 40 an den schmalen Enden der Öffnungen 312 angeordnet sind. Das Batteriemodul 10 umfasst eine Mehrzahl von Brückenkontaktelementen 50, wobei die Mehrzahl der Brückenkontaktelemente 50 so in dem Modulträger 300 angeordnet sind, dass sie in verschiedenen Reihen liegende Batteriezellen 100 verbinden können. Das erster Verbindungsmittel umfasst ein sich selbst findendes Stecksystem, um den Balancingbus 130 mit den elektronischen Batteriezellenüberwachungsmodulen 110 und dem Energiespeichermodul 170 zu verbinden. Der Pluspol 102 der Batteriezelle 100 wird durch ein Polkontaktelement 70 mit Anschlusselement 30 gebildet das in Steckrichtung X ausgerichtet ist. Der Minuspol 104 der Batteriezelle 100 wird durch ein Polkontaktelement 70 mit Anschlusselement 30 gebildet, das in Steckrichtung X ausgerichtet ist.

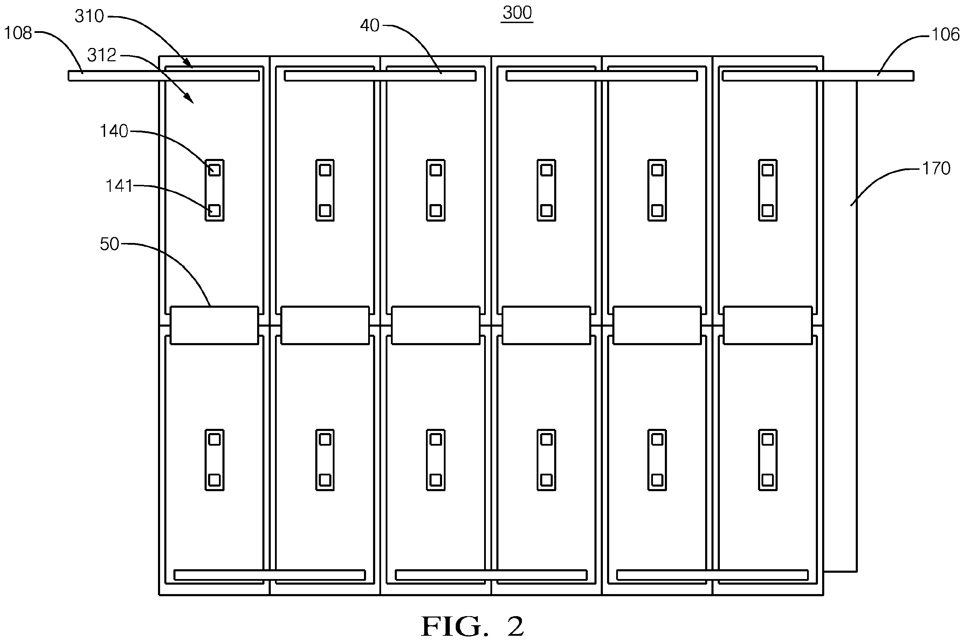

Figur 2 zeigt eine Darstellung des Modulträgers 300, wobei die Ansicht so gewählt ist, dass der Betrachter in die Ausnehmungen 310 hineinschaut. An den Seiten der Ausnehmungen 310 sind die Stromschienen 40 zu sehen. Um 180 Grad gebogene Stromschienen 50 befinden sich mittig der Ausnehmungen 310. An den Flächen gegenüber den Öffnungen 312 sind Verbindungsmittel zum Kontaktieren der zwei elektrischen Leitungen 140, 141 des Balancingbuses 130 vorgesehen. Aus Öffnungen 312, die für Batteriezellen 100 vorgesehen sind, die jeweils die erste und die letzte Batteriezelle der Reihenschaltung bilden, ragen Anschlussklemmen 106, 108 heraus, um das Batteriemodul 10 an ein elektrisches Gerät oder an weitere Module anschließbar zu machen. Der Energiespeicher 170 ist im Modulträger 300 integriert sowie die Verdrahtung des Balancingbuses 130. Werden die Batteriezellen 100 in die Ausnehmungen hineingesteckt, werden sie automatisch mit den Stromschienen und dem Balancingbus 130 verbunden und der Balancingzyklus startet.

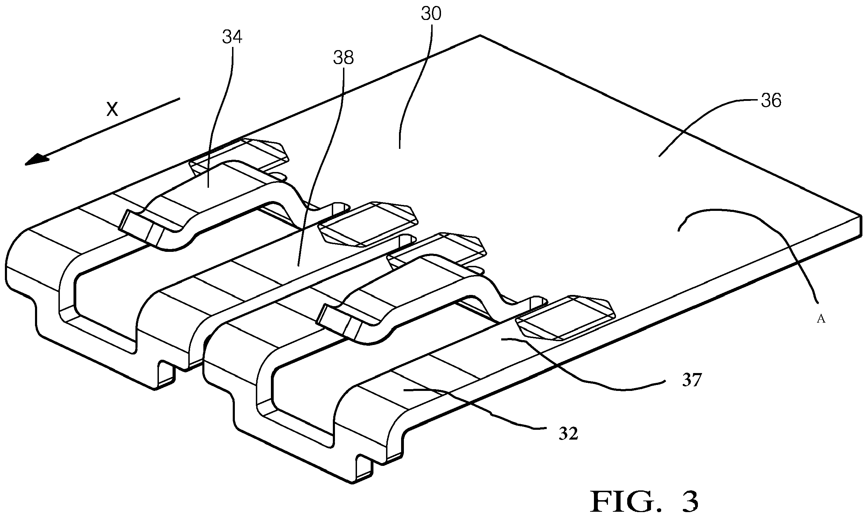

Figur 3 zeigt eine perspektivische Darstellung des Anschlusselements 30. Das zweite Verbindungsmittel, umfasst das elektrische Anschlusselement 30, welches als Stanzteil aus einem Metallblech 36 gefertigt ist und zumindest eine frei auskragende Zunge 34 aufweist, die aus der Blechebene auf eine erste Seite A des Blechs 36 heraus gebogenen ist und sich in einer zur Blechebene parallelen Ebene erstreckt. Das Anschlusselement 30 weist zwei in Steckrichtung X des Anschlusselements 30 frei auskragenden Finger 37, 38 auf, welche sich parallel zu der zumindest einen, frei auskragenden Zunge 34, in der Blechebene erstrecken. Die beiden frei auskragenden Finger 37, 38 bilden in Steckrichtung das vordere Ende 32 des Anschlusselements 30.

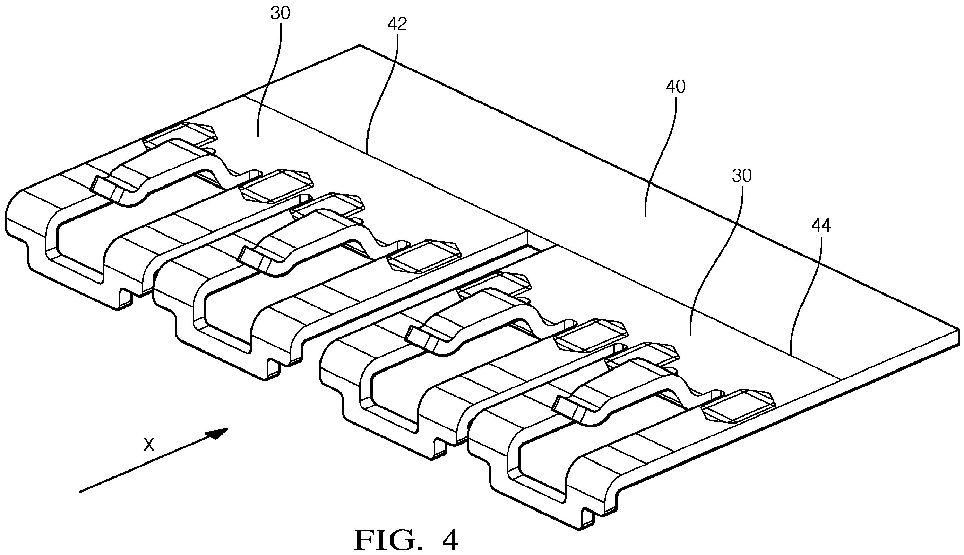

Figur 4 zeigt eine perspektivische Darstellung einer Stromschiene 40.
Jede Stromschiene 40 weist an ihrem ersten Ende 42 ein Anschlusselement 30, das entgegen der Steckrichtung X ausgerichtet ist, auf. Jede Stromschiene 40 weist an ihrem zweiten Ende 44 ein Anschlusselement 30, das entgegen der Steckrichtung X ausgerichtet, auf. Dadurch kann der Pluspol 102 lösbar mit dem ersten Ende 42 einer Stromschiene 40 verbunden werden. Der Minuspol 104 kann, entlang der Steckrichtung X, mit dem zweiten Ende 44 einer Stromschiene 40 verbunden werden.

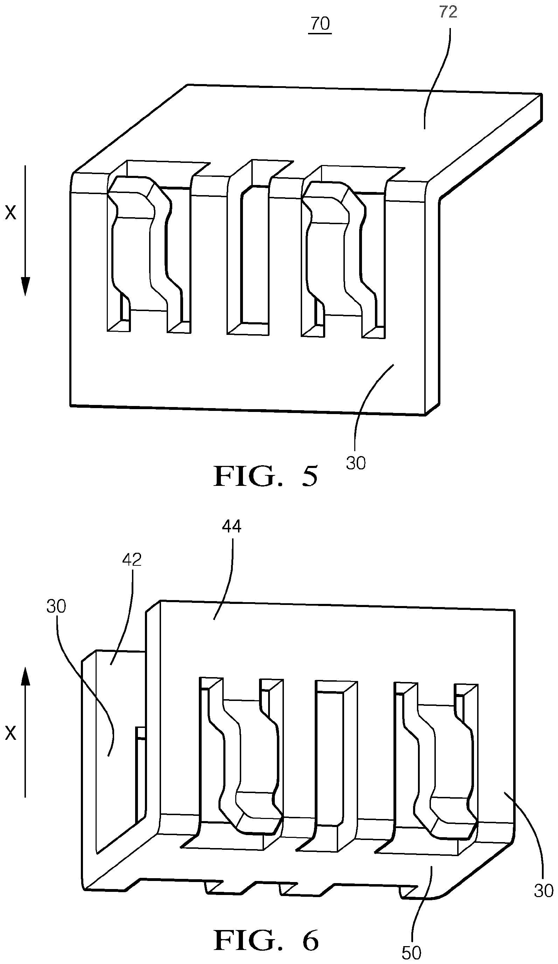

Figur 5 zeigt eine perspektivische Darstellung eines Polkontaktlements 70, zur festen Anbringung an einen Pluspol 102 der Batteriezelle 100, bzw. an einen Minuspol 104 einer Batteriezelle 100 mit Hilfe eines Kontaktstreifens 72, der sich gewinkelt zur Steckrichtung erstreckt. Das Polkontaktelement 70 umfasst ebenfalls ein Anschlusselement 30 zur lösbaren Verbindung mit einem Gegenstück.

Figur 6 zeigt eine perspektivische Darstellung eines Brückenkontaktelements 50.

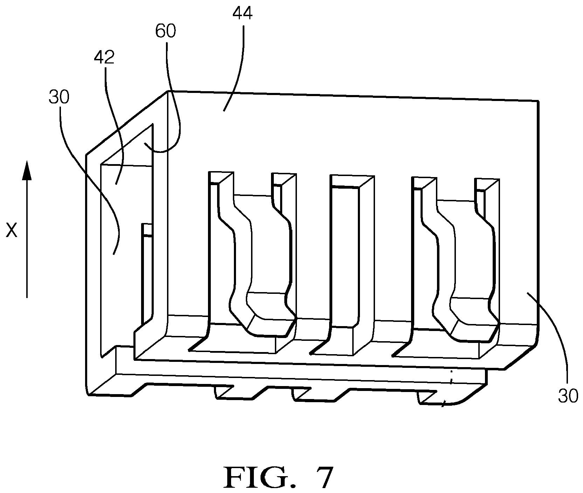

Figur 7 zeigt eine perspektivische Darstellung eines Brückenkontaktelements 60 wie in Figur 6. Sie erfüllt dieselbe Aufgabe, jedoch befindet sich die Verbindung auf der gegenüber liegenden Seite wie beim Brückenkontaktelement 50 in der vorherigen Darstellung Fig. 6., an den anderen Enden der Anschlusselemente 30, was, je nach Anordnung und Anforderung, an den Toleranzausgleich für Montage und Betrieb eine alternative Ausführungsform ist.

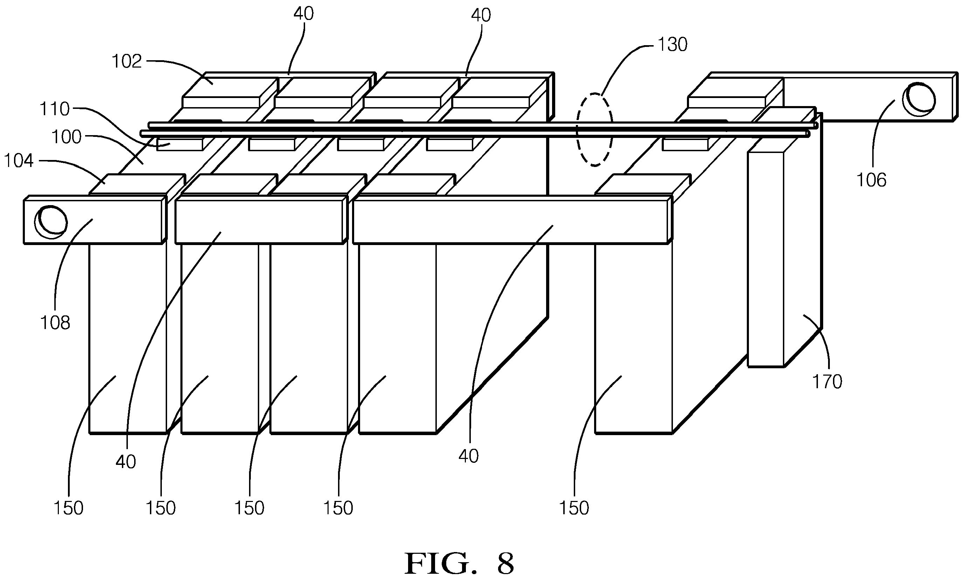

Figur 8 zeigt eine perspektivische Darstellung eines Batteriemoduls 10. diese Darstellung veranschaulicht wie die Batteriezellen elektrisch miteinander verbunden sind. Die sonst im Modulträger 300 verborgenen elektrischen Verbindungen können hier einfacher betrachtet werden. Das Batteriemodul 10 umfasst eine Mehrzahl von Batteriezellen 100. An jeder der Batteriezellen 100 ist ein elektronisches Batteriezellenüberwachungsmodul 110 angebracht. Die Batteriezellenüberwachungsmodule 110 sind durch einen, mindestens zwei elektrische Leitungen 140, 141 umfassenden, Balancingbus 130, zur Übertragung von Daten und elektrischem Strom, miteinander verbunden. Die elektronischen Batteriezellenüberwachungsmodule 110 sind mit einem Pluspol 102 und einem Minuspol 104 der Batteriezelle 100 elektrisch verbunden. Das ist elektronische Batteriezellenüberwachungsmodul 110 ist einteilig mit der Batteriezelle 100 ausgebildet wodurch ein autonomes Batterieelement 150 gebildet wird. Jede Batteriezelle 100 des Batteriemoduls 10 ist jeweils mit dem eigenen Pluspol 102 mit einem Minuspol 104 einer benachbarten Batteriezelle 100 elektrisch verbunden. Des Weiteren ist jede Batteriezelle 100 des Batteriemoduls 10 jeweils mit dem eigenen Minuspol 104 mit einem Pluspol 102 einer benachbarten Batteriezelle 100 elektrisch verbunden. So das eine Reihenschaltung aus Batteriezellen 100 entsteht. Eine Ausnahme besteht bei der ersten und letzten Batteriezelle 100, deren freier Pol mit einer Anschlussklemme 106, 108 versehen ist, um das Batteriemodul 10 an ein elektrisches Gerät anschließbar zu machen.

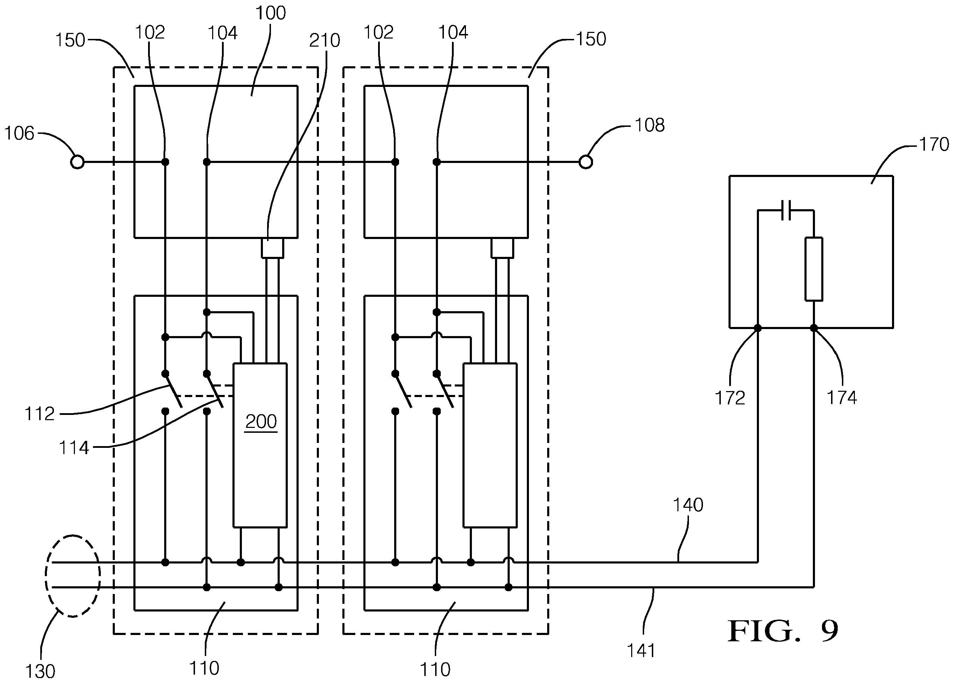

Figur 9 zeigt eine schematische Darstellung Batteriemoduls 10. Es sind beispielhaft nur zwei Batteriezellen Die elektronischen Batteriezellenüberwachungsmodule 110 weisen einen ersten elektrischen Schalter 112 und einen zweiten elektrischen Schalter 114 auf. Die elektrischen Schalter 112, 114 sind dazu ausgebildet die Batteriezellen 100 elektrisch mit jeweils einer der zwei elektrische Leitungen 140 des Balancingbuses 130 zu verbinden. Das Batteriemodul 10 umfasst ein Energiespeichermodul 170 zur Speicherung elektrischer Energie. Das Energiespeichermodul 170 umfasst in der Darstellung beispielhaft eine Kombination aus Kondensator und Spule. Es könnt aber auch ein alternativer Speicher für elektrische Energie verwendet werden. Das Energiespeichermodul 170 ist elektrisch mit den zwei elektrischen Leitungen 140 des Balancingbuses 130 verbunden, um elektrische Energie darüber aufzunehmen oder abzugeben. In der Darstellung ist das Energiespeichermodul 170 mit seinen Anschüssen 172, 174 mit den zwei elektrischen Leitungen 140 verbunden. Die elektronischen Batteriezellenüberwachungsmodule 110 und das Energiespeichermodul 170 sind durch den Balancingbus 130 miteinander verbunden und bilden ein Zell-Balancing-System. Jedes der elektronischen Batteriezellenüberwachungsmodule 110 kann unabhängig von den weiteren elektronischen Batteriezellenüberwachungsmodulen 110, den Pluspol 102 der Batteriezelle 100 mittels des ersten elektrische Schalters 112 mit einer der elektrischen Leitungen 100 des Balancingbusses 130 verbinden und den Minuspol 104 der Batteriezelle 100 mittels des zweiten elektrischen Schalters 114 mit der anderen elektrischen Leitung 141 des Balancingbusses 130 verbinden. Jedes der Batteriezellenüberwachungsmodule 110 ist programmierbar und weist mindestens einen Mikroprozessorbaustein 200 auf der, Speicher, Ein/Ausgabe Ports, Temperatur und Spannungsmessmittel umfasst. Die elektronischen Batteriezellenüberwachungsmodule 110 weisen eine grundlegende Kommunikationsfunktionalität zur Kommunikation mit den anderen Batteriezellenüberwachungsmodulen 110 mittels des Balancingbuses 130 auf.

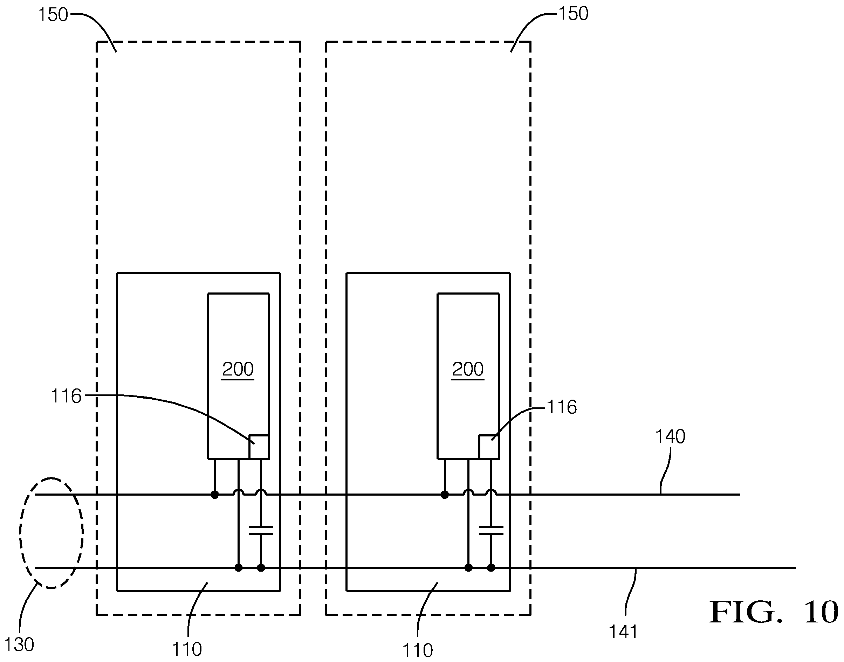

Figur 10 zeigt Details zur der kapazitiven Kopplung des Datenanschlusses in schematische Darstellung. Das Batteriezellenüberwachungsmodule 110 weist mindestens einen elektrischen Datenanschluss 116 auf der kapazitiv mit einer der elektrischen Leitungen 140 141 des Balancingbuses 130 verbunden ist, wobei Steuersignale durch Modulation auf dieser elektrischen Leitung 140, 141 zu dem Datenanschluss 116 übertragen werden.

## Patentansprüche

1. Ein Batteriemodul (10) für Hochvolt-Batterie-Packs vorzugsweise für den Einsatz in Fahrzeugen, umfassend eine Mehrzahl von Batteriezellen (100), ein Zell-Balancing-System zum Balancieren der Ladung der einzelnen Batteriezellen (100), umfassend jeweils ein an jeder der Batteriezellen (100) angebrachtes elektronisches Batteriezellenüberwachungsmodul (110), wobei die Batteriezellenüberwachungsmodule (110) lösbar, mittels erster Verbindungsmittel, durch einen Balancingbus (130), zur Übertragung von Daten und elektrischem Strom, miteinander verbunden sind, wobei die elektronischen Batteriezellenüberwachungsmodule (110) mit einem Pluspol (102) und einem Minuspol (104) der Batteriezelle (100) elektrisch verbunden sind, einen Modulträger (300) zum Aufnehmen und halten der Mehrzahl der Batteriezellen (100), wobei der Modulträger (300) zweite Verbindungsmittel, zum elektrischen Verbinden eines Pluspols (102) der Batteriezelle (100) mit dem Minuspol (104) einer benachbarten Batteriezelle (100), sowie zum elektrischen Verbinden eines Minuspols (104) der Batteriezelle (100) mit dem Pluspol (102) einer benachbarten Batteriezelle (100) umfasst, wobei der Modulträger (300) den Balancingbus (130), der mindestens zwei elektrische Leitungen (140, 141) aufweist, umfasst, wobei der Modulträger (300) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist, um elektrische Energie darüber aufzunehmen oder abzugeben.

2. Batteriemodul (10) nach Anspruch 1, wobei das zweite Verbindungsmittel ein elektrisches Anschlusselemente (30) umfasst, welche als Stanzteile aus einem Metallblech (36) gefertigt und zumindest eine frei auskragende Zunge (34) aufweist, die aus der Blechebene auf eine erste Seite (A) des Blechs (36) heraus gebogenen ist und sich in einer zur Blechebene parallelen Ebene erstreckt, wobei das Anschlusselement (30) zwei in Steckrichtung (X) des Anschlusselements (30) frei auskragenden Finger (37, 38) aufweist, welche sich parallel zu der zumindest einen frei auskragenden Zunge (34) in der Blechebene erstrecken, wobei die beiden frei auskragenden Finger (37, 38) in Steckrichtung das vordere Ende (32) des Anschlusselements (30) bilden.

3. Batteriemodul (10) nach Anspruch 2, wobei das zweite Verbindungsmittel eine Mehrzahl von Polkontaktelementen (70) umfasst, wobei jedes Polkontaktelement (70) ein elektrisches Anschlusselemente (30) umfasst, wobei sich von den beiden frei auskragenden Fingern (37, 38), am vordere Ende (32), ein Kontaktstreifen (72) des Blechs (36) rechtwinkelig zur Steckrichtung (X), entgegen der erste Seite (A), erstreckt.

4. Batteriemodul (10) nach Anspruch 3, wobei ein Polkontaktelement (70) am Pluspol (102) einer Batteriezelle (100) angebracht ist und wobei ein zweites Polkontaktelement (70) am Minuspol (104) einer Batteriezelle (100) angebracht ist, wobei die Polkontaktelemente (70) in Steckrichtung (X) ausgerichtet sind.

5. Batteriemodul (10) nach Anspruch 2, umfassend eine Mehrzahl von Stromschienen (40), wobei jede Stromschiene (40) an einem ersten Ende(42) ein Anschlusselement (30) aufweist und an ihrem zweiten Ende (44) ein zweites Anschlusselement (30) aufweist, wobei sich die Stromschiene rechtwinkelig zur Steckrichtung (X) erstreckt.

6. Batteriemodul (10) nach Ansprüchen 4 und 5, wobei die elektrischen Anschlusselemente (30) der Polkontaktelemente (70) und die elektrischen Anschlusselemente (30) der Stromschienen (40) so zueinander und entlang der Steckachse (X) ausgerichtet sind , das sie, bei korrekter Ausrichtung der Batteriezelle (100), bei Bewegung aufeinander zu, ineinander gleiten und elektrischen Kontakt herstellen.

7. Batteriemodul (10) nach Ansprüchen 4 und 5,wobei die elektrischen Anschlusselemente (30) der Polkontaktelement (70) und die elektrischen Anschlusselemente (30) der Stromschienen (40) so zueinander und entlang der Steckachse (X) ausgerichtet sind, dass sie, bei inkorrekter Ausrichtung der Batteriezelle (100), bei Bewegung aufeinander zu, nicht ineinander gleiten und keinen elektrischen Kontakt herstellen.

8. Batteriemodul (10) nach dem vorhergehenden Anspruch, wobei ein erstes Polkontaktelement (70) angebracht an einem ersten Batteriepol, einer Batteriezelle (100), eine Ausdehnung, rechtwinkelig zur Steckrichtung (X), aufweist, die verschieden ist von der Ausdehnung eines zweiten Polkontaktelements (70), dass an dem zweiten Batteriepol angebracht ist.

9. Batteriemodul (10) nach Anspruch 2, wobei das zweite Verbindungsmittel eine Mehrzahl von Brückenkontaktelementen (50, 60) umfasst, wobei jedes Brückenkontaktelement (50, 60) zwei der elektrischen Anschlusselemente (30) umfasst, die parallel zueinander angeordnet sind und wobei die ersten Seiten (A) der elektrischen Anschlusselemente (30) in entgegengesetzte Richtungen zeigen, wobei die elektrischen Anschlusselemente (30) durch ein Stück des Metallblechs (36) verbunden sind.

10. Batteriemodul (10) nach Anspruch 5, wobei der Modulträger (300) eine Mehrzahl von Ausnehmungen (310) aufweist die dazu ausgebildet sind die Mehrzahl von Batteriezellen (100) aufzunehmen und zu halten, wobei sich jede Ausnehmung (310) von einer Öffnung (312), entlang der Steckrichtung (X) erstreckt, wobei die Mehrzahl der Stromschienen (40) gegenüber den Öffnungen (312) angeordnet sind.

11. Batteriemodul (10) nach einem der vorhergehenden Ansprüche, wobei das erste Verbindungsmittel ein sich selbst findendes Stecksystem umfasst, um die elektronischen Batteriezellenüberwachungsmodule (110) mit dem Balancingbus und dem Energiespeichermodul (170) zu verbinden.

12. Batteriemodul (10) nach einem der vorhergehenden Ansprüche, wobei das Energiespeichermodul (170) einteilig mit dem Modulträger (300) ausgebildet ist.

13. Batteriemodul (10) nach einem der vorhergehenden Ansprüche, wobei die elektronischen Batteriezellenüberwachungsmodule (110) einen ersten elektrische Schalter (112) und einen zweiten elektrischen Schalter (114) aufweisen, wobei die elektrischen Schalter (112, 114) dazu ausgebildet sind die Batteriezellen (100) elektrisch mit jeweils einer der zwei elektrische Leitungen (140, 141) des Balancingbuses (130) zu verbinden, wobei die elektronischen Batteriezellenüberwachungsmodule (110) und das Energiespeichermodul (170) durch den Balancingbus (130) miteinander verbunden, ein Zell-Balancing-System bilden.

14. Verfahren zum Zusammenbau eines Batteriepacks (10) umfassend die Schritte:
a) Bereitstellen einer Mehrzahl von Batteriezellen (100), wobei die Mehrzahl von Batteriezellen (100) nach ihren Kenndaten vorselektiert ist, umfassend jeweils ein an jeder der Batteriezellen (100) angebrachtes elektronisches Batteriezellenüberwachungsmodul (110), wobei die elektronischen Batteriezellenüberwachungsmodule (110) mit einem Pluspol (102) und einem Minuspol (104) der Batteriezelle (100) elektrisch verbunden sind, wobei die Batteriezellenüberwachungsmodule (110) lösbar, mittels erster Verbindungsmittel, durch einen Balancingbus (130), zur Übertragung von Daten und elektrischem Strom, miteinander verbindbar sind;
b) Bereitstellen eines Modulträgers (300) zum Aufnehmen und halten der Mehrzahl der Batteriezellen (100), wobei der Modulträger (300) zweite Verbindungsmittel, zum elektrischen Verbinden eines Pluspols (102) der Batteriezelle (100) mit dem Minuspol (104) einer benachbarten Batteriezelle (100), sowie zum elektrischen Verbinden eines Minuspols (104) der Batteriezelle (100) mit dem Pluspol (102) einer benachbarten Batteriezelle (100) umfasst, wobei der Modulträger (300) den Balancingbus (130), der mindestens zwei elektrische Leitungen (140, 141) aufweist, umfasst, wobei der Modulträger (300) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist um elektrische Energie darüber aufzunehmen oder abzugeben;
c) Einstecken der Mehrzahl der Batteriezellen (100) in den Modulträger (300) wodurch die Verbindung der Batteriezellenüberwachungsmodule (110) miteinander und mit dem Energiespeichermodul (170) über den Balancingbus (130) hergestellt wird, sowie die Verbindungen der Batteriezellen (100) mit den zweiten Verbindungsmitteln .
